Europäisches Patentamt

(19) European Patent Office

Office européen des brevets

(11) Publication number : **0 174 728**
**B1**

# EUROPEAN PATENT SPECIFICATION

(45) Date of publication of patent specification :
**19.10.88**

(51) Int. Cl.⁴ : **B 64 D 13/04**

(21) Application number : **85305570.5**

(22) Date of filing : **05.08.85**

(54) **Air cycle cooling.**

(30) Priority : **10.08.84 GB 8420426**

(43) Date of publication of application :
**19.03.86 Bulletin 86/12**

(45) Publication of the grant of the patent :
**19.10.88 Bulletin 88/42**

(84) Designated contracting states :
**DE FR GB IT SE**

(56) References cited :
**GB-A- 994 856**
**GB-A- 2 026 152**
**US-A- 2 902 836**
**US-A- 3 428 242**

(73) Proprietor : **NORMALAIR-GARRETT (HOLDINGS) LIMITED**
**Group Patents Dept. Westland Works Box 82**
**Yeovil Somerset, BA20 YB (GB)**

(72) Inventor : **Roots, Christopher Francis**
**"Bridge Cottage"**
**Lufton Yeovil Somerset (GB)**
Inventor : **Axe, Richard James**
**149 Monksdale**
**Yeovil Somerset (GB)**

(74) Representative : **Jack, Bruce James et al**
**FORRESTER & BOEHMERT Widenmayerstrasse 4/I**
**D-8000 Munchen 22 (DE)**

Jouve, 18, rue St-Denis, 75001 Paris, France

## Description

This invention relates to air cycle cooling and is particularly concerned with a method and an apparatus for air cycle cooling.

There is a frequent requirement in aircraft and other aerospace applications for equipment bays and enclosures to be cooled. If this requirement is to be met by a flow of cooling air then the mass flow rate of the cooling air must be kept above a predetermined minimum value while the temperature of the cooling air is kept below a predetermined maximum value, to provide both the required ventilation and heat sink capacity in relation to the size of the bay or enclosure and the heat produced by the equipment it contains.

It is convenient in an aircraft application to use ambient (ram) air as the air source for the system but the system must be capable of maintaining the required mass flow and temperature of cooling air delivered by the system, irrespective of changes in the pressure and temperature of the ram air supply under varying operating conditions of the aircraft.

A further requirement is that the system should be housed in the smallest possible space envelope and be of minimum weight.

It is an object of the present invention to provide a method and an apparatus for air cycle cooling and, in particular, for supplying a cooling air flow to an enclosure in an aircraft or other aerospace application, preferably using ram air as its air source and capable of delivering cooling air at a required mass flow rate above a predetermined minimum value and at a controlled temperature held below a predetermined maximum value while operating in the conditions of varying atmospheric pressure and varying temperature of ambient air which are encountered in a predicted flight envelope.

Air cycle cooling systems are well known. In general these comprise a turbine through which source air at a relatively high pressure and temperature is passed to be expanded and thereby reduced in pressure and temperature, the power produced by the turbine being utilised to drive a fan and/or a compressor. One type of air cycle cooling system is that in which the cooling effect of the expansion in the turbine is supplemented by regenerative cooling, cooled output air being utilised to extract heat from source air upstream of the turbine, by heat-exchange therewith. Examples of this type of system are disclosed in US-A-2 902 836 and GB-A-2 026 152. The present invention is concerned with this type of air cycle cooling system according to the preamble of the independent claims 1 and 2.

The invention provides a method of producing a flow of output air at a controlled temperature, comprising reducing the temperature of a source air as required by expansion in a turbine supplemented as required by regenerative cooling, characterised by sensing the temperature of the output air of the turbine and controlling the supplementary regenerative cooling, in accordance with the sensed temperature, by adjustment of coolant flow in a regenerative heat-exchanger providing the supplementary cooling.

The invention also provides an air cycle cooling apparatus comprising a system air inlet connected to a system air outlet by way of a flow path comprising a regenerative heat-exchanger and an air expansion turbine, characterised by air flow control valve means responsive to temperature of system outlet air and arranged to control a coolant flow path to the heat-exhanger for system air that has been cooled by the turbine.

In preferred forms of apparatus in accordance with the invention, the air flow control valve means is arranged to control a system air bypass of the regenerative heat-exchanger and the air expansion turbine, so that in response to rising system outlet air temperature the air flow control valve means first close said bypass and thereafter open said coolant flow path.

Preferably the air flow control valve means comprises two valve-heads respectively controlling the coolant flow path and the system air bypass and operated by a thermal actuator utilising a temperature responsive medium.

In a preferred embodiment of the invention, an air cycle cooling apparatus is provided as an integrated cylindrical unit, comprising in combination an annular regenerative heat-exchanger having a central duct, the heat-exchanger having at one end an annular chamber with an inlet for system air to flow as charge-air through the heat-exchanger ; a radial flow air expansion turbine at the end of the heat-exchanger remote from said annular chamber and providing a turn-around flow path for the system air to pass into the said central duct subsequent to expansion and cooling by the turbine, the wheel of the turbine being arranged to drive a compressor wheel mounted on a shaft common thereto ; at least one inlet port in the wall of the central duct adjacent to the turbine outlet for admitting cooled system air as coolant flow into the heat-exchanger ; at least one bypass port in the wall of the central duct adjacent to the outlet thereof and connecting the said annular chamber directly to the central duct ; and a temperature-responsive air flow control valve means arranged to sense temperature of the system air in the central duct and operably respond to control flows through said inlet port and said bypass port.

The temperature-responsive air flow control valve means may be housed in the central duct and may include a linear actuator that is extended by expansion of a thermal wax.

The linear actuator may carry two annular valve-heads spaced from each other along the length of the actuator.

The invention will now be further described by way of example and with reference to the accompanying drawings in which :

Figure 1 diagrammatically illustrates an air cycle cooling system embodying the invention; and

Figure 2 schematically illustrates an air cycle cooling apparatus provided as an integrated cylindrical unit in accordance with another embodiment of the invention.

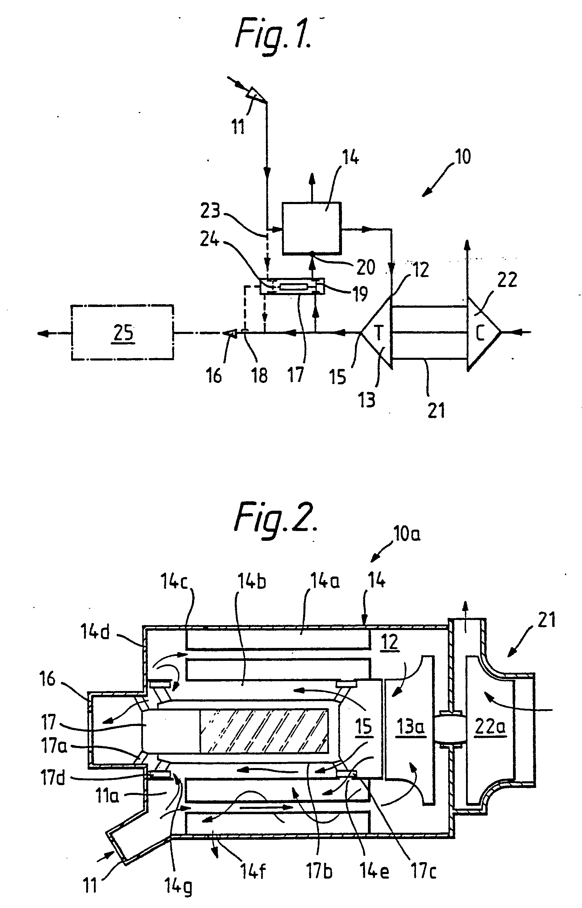

Referring to Figure 1 an air cycle cooling system 10 is arranged to receive a supply of ram air through a system air inlet 11 conduitly connected by way of the charge flow side of a regenerative heat-exchanger 14 to an air inlet 12 of a radial flow air expansion turbine 13.

A turbine outlet 15 is conduitly connected to a system cooling air outlet 16 and is also conduitly connected, by way of a temperature responsive air flow control valve means 17, to the coolant flow side of the regenerative heat exchanger 14. The flow control valve means 17 includes a temperature sensor element 18 situated in a position to respond to the temperature of the cooling air at the system outlet 16 and arranged to act on a valve-head 19 controlling the coolant flow entry 20 of the regenerative heat-exchanger 14. The turbine 13 forms part of an air expansion turbine unit 21 in which the turbine wheel is mounted on a common shaft with a compressor wheel of an air compressor 22.

In a modification of this embodiment, illustrated in Figure 1 by broken lines, the system air inlet 11 has a conduit connection 23 with the system outlet 16 also controlled by the temperature responsive air flow control valve means 17, which in this modification is provided with a second valve-head 24 for controlling the conduit connection 23. The conduit connection 23 provides a route between the ram air inlet 11 and the system outlet 16 which bypasses both the regenerative heat-exchanger 14 and the expansion turbine 13 and which is opened or closed according to the temperature sensed by the temperature sensor element 18.

The system outlet 16 provides connection for cooling air to be delivered to a region of use 25.

Referring to Figure 2, there is shown an air cycle cooling apparatus 10a incorporating the modification of Figure 1 and provided as a single unit of compact and generally cylindrical form having particular suitability for an aircraft use where a small space envelope is available for housing the unit. Items which are common with Figure 1 are given like reference numerals. The apparatus 10a comprises an annular regenerative heat-exchanger 14 arranged and connected to the turbine end of an air expansion turbine unit 21 in a manner in which the charge-air side of an annular core 14a of the heat-exchanger 14 connects with a turbine air inlet 12 and by way of turbine nozzles (not shown) radially across an inflow turbine wheel 13a to a turbine outlet 15 and thence through a central duct 14b of the heat exchanger 14 to system outlet 16. The outlet 16 is formed in a core-enclosing body structure 14c of the heat-exchanger 14 and projects outwardly from an end wall 14d, which is remote from the air expansion turbine unit 21. This wall 14d also defines an end wall of an annular air receiving chamber 11a which is connected with a system air inlet 11. The annular chamber 11a is in alignment with the upstream end of the charge flow side of the annular core 14a.

An inner peripheral wall of the body structure 14c defines the central duct 14b and is provided with a ring of air inlets 14e giving entry to the coolant side of the annular core 14a at a position adjacent to the turbine outlet 15, whilst the outer peripheral wall of the body structure 14b includes a ring of associated air outlets 14f positioned adjacent to that end of the annular core 14a which is remote from the turbine unit 21. The inner peripheral wall also includes a ring of bypass ports 14g connecting the annular chamber 11a of the air inlet 11 with the central duct 14b at a position near the outlet 16. A temperature-responsive air flow control valve means 17 is positioned in the central duct 14b and secured by struts 17a to the wall of the system outlet 16. The air flow control valve means 17 includes a linear actuator 17b that is extended by expansion of a thermal wax against a return spring (not shown). The movable section of the actuator 17b carries on strut arrangements two annular valve-heads 17c and 17d which are spaced from each other along the length of the actuator. The annular valve-heads 17c and 17d are in sliding contact with the inner peripheral wall of the body structure 14b and are so arranged that the valve-head 17c may obturate the coolant air inlets 14e and the valve-head 17d may obturate the bypass ports 14g. The thermal wax is contained in the section of the actuator that is secured by the struts 17a where it can sense and respond to the temperature of the cooling air at the outlet 16. The turbine wheel 13a of the expansion turbine unit is mounted on a common shaft with a centrifugal compressor wheel 22a arranged to take in and compress ambient air before discharging same.

In operation of the invention as embodied in Figure 1 and excluding the modification of the conduit connection 23 and valve-head 24, ram air enters the system 10 at the system air inlet 11 and passes as charge-air through the regenerative heat-exchanger 14 before expanding through the turbine 13 and being cooled, thereafter passing as cooling air from the system outlet 16 for passage to a region of use 25. The temperature-responsive air flow control valve 17 senses the temperature of the cooling air at the system outlet 16 by means of the sensor element 18 and responds to temperature rising above a predetermined value by moving the valve-head 19 from a position in which it closes the coolant entry 20 to positions in which it permits increasing amounts of cooled air from the expansion turbine 13 to pass as coolant flow through the regenerative heat-exchanger 14 for this to become operative. This action takes a portion of the cooled air from that passing to the system outlet 16 and places it in heat exchange relationship in the heat-exchanger 14 with ram air passing therethrough as charge-air. This reduces the temperature of the ram air before it enters the turbine 13 with a consequential lowering of temperature of the cooled air being discharged by the turbine 13. Thus, by continuous temperature sensing by the sensor element 18 and consequent adjustment of the position of the valve-head 19 the cooling air temperature is controlled so as not to exceed a predetermined maximum value. The power generated in expanding air through the turbine 13 is absorbed by the compressor 22 drawing in and compressing ambient air which is subsequently dumped.

In the modified embodiment of Figure 1, with the inclusion of the conduit 23 and the second valve-head 24, a major portion of the ram air that enters the system 10 is able to bypass the regenerative heat-exchanger 14 and the expansion turbine 13. When the ram air is at such a low temperature that it does not require to be cooled, or requires only to be cooled slightly in order to remain below the predetermined maximum temperature value at the system outlet 16, the conduit 23 is unobstructed by the second valve-head 24 so that, whilst a small quantity of ram air passes into and through the regenerative heat-exhanger 14, which at this period is ineffective, and the expansion turbine 13, most of it flows directly from the system air inlet 11 to the system outlet 16. However when the temperature sensor element 18 senses a rise in the temperature of the air at the system outlet 16, the temperature-responsive air flow control valve means 17 commences to move the second valve-head 24 towards obturating the conduit 23 and so reduces the quantity of the bypassing ram air in order to increase the quantity passing through the turbine 13 for expansion and consequent cooling. If the temperature of the ram air further increases, the second valve-head 24 eventually reaches a position in which it prevents any further bypass flow of ram air, so that all of the ram air passes through the regenerative heat-exchanger 14, which is still ineffective, and the turbine 13. Thereafter, with a continuing increase in the temperature of the ram air, the air flow control valve means 17 moves the valve-head 19 from the closed position progressively to open the coolant flow entry 20 to the heat-exchanger 14, so that a small quantity of the cooled air discharged from the air expansion turbine 13 flows through the heat-exchanger as coolant flow so that the regenerative heat-exchanger 14 pre-cools the air passing to the turbine 13.

In general terms operation of the apparatus shown in Figure 2 is the same as that for the system of Figure 1 when modified to include the conduit connection 23 and the second valve-head 24. However, its particular operation will now be described.

Ram air enters the apparatus 10a by way of the air inlet 11 and is distributed as system air in the annular air receiving chamber 11a across the inlet end of the regenerative heat-exchanger 14. However, while the temperature of the ram air remains below the predetermined maximum temperature required, the ring of bypass ports 14g are uncovered so that the greater part of the system air passes directly from the annular chamber 11a to the outlet 16 with only a small portion passing to the outlet by way of the regenerative heat-exchanger 14 and the expansion turbine 13. Until such time as there is coolant flow through the regenerative heat-exchanger this remains inoperative and cooling effect is obtained only from expansion of system air crossing the turbine. The temperature of the air at the outlet 16 is sensed and reacted by the thermal wax contained in the fixed part of the air flow control valve means 17 which is secured to the outlet 16. As the temperature of the ram air increases, the temperature of air sensed by the thermal wax rises correspondingly, so that the wax expands and causes the actuator 17b to extend and move the second annular valve-head 24 to progressively obturate the bypass ports 14g. Increasing quantities of the system air then pass through the regenerative heat-exchanger 14 and lessening quantities through the bypass ports 14g until the latter are eventually closed and the total system air flow is passed through the heat-exchanger 14 and across the turbine wheel 13a where it expands and is cooled before passing to the outlet 16 by way of the central duct 14b. If the temperature at the outlet 16 rises further, the actuator 17b continues to extend and whilst continuing to hold the bypass ports 14g in a closed condition the annular valve-head 17c progressively uncovers the ring of air inlet ports 14e until these are wide open so that some of the cooled air discharging from the expansion turbine 13 passes through the coolant flow side of the regenerative heat-exchanger 14 to be placed in heat exchange relationship with system air passing through the charge side thereof and so provide pre-cooling of the system air before it enters the expansion turbine 13. The power generated in expanding the system air across the turbine wheel 13a with the consequential desired reduction in temperature of the air, is absorbed by the centrifugal compressor drawing in ambient air, compressing it and discharging it overboard.

The method and apparatus for air cycle cooling in accordance with the present invention automatically maintains a cooling flow to an enclosure at a mass flow rate above a predetermined minimum value and at a temperature below a predetermined maximum value. In application to cooling an aircraft enclosure a wide range of different flight conditions may be accommodated, depending on, at any one time, height and speed of the aircraft and the prevailing meteorological conditions, e. g. a hot or cold day, apparatus in accordance with the invention being able automatically to pass « cool » ram air directly to the system outlet with only a minimum quantity receiving cooling effect from the turbine, to pass « warm » ram air to the system outlet by way of the expansion turbine so that most or all of it is cooled with little or none passing directly to the outlet, or to pass all « hot » ram air through the expansion turbine and to use some of this when expanded and cooled as coolant in a regenerative heat-exchanger to pre-cool the ram air flow entering the turbine.

**Claims**

1. A method of producing a flow of output air (16) at a controlled temperature comprising reducing the temperature of a source air (11) as required by expansion in a turbine (13) supplemented as required by regenerative cooling, characterised by sensing the temperature of the output air (15) of the turbine (13) and controlling the supplementary regenerative cooling, in accordance with the sensed temperature, by adjustment of coolant flow (20) in a regenerative heat-exchanger (14) providing the supplementary cooling.

2. An air cycle cooling apparatus (10, 10a) having a system air inlet (11, 12) connected to a system air outlet (16) by a flow path comprising a regenerative heat-exchanger (14) and an air expansion turbine (13), characterised by air flow control valve means (17) responsive to temperature of system outlet air (16), and arranged to control a coolant flow path to the heat-exchanger (14) for system air that has been cooled by the turbine.

3. An air cycle cooling apparatus as Claimed in Claim 2, further characterised by the air flow control valve means (17) being arranged to control a system air bypass (14 g, 23) of the regenerative heat-exchanger (14) and the air expansion turbine (13), and so that in response to rising system outlet (16) air temperature the air flow control valve means (17) first close said bypass (14g, 23) and thereafter open the said coolant flow path (20).

4. An air cycle cooling apparatus as claimed in Claim 2 or Claim 3, further characterised in that the air flow control valve means (17) comprises two valve-heads (19, 24) respectively controlling the coolant flow path (20) and said bypass (14g, 23) and operated by a thermal actuator (17b) utilising a temperature responsive medium.

5. An air cycle cooling apparatus according to Claim 2 or Claim 3, provided as an integrated substantially cylindrical unit and comprising in combination an annular regenerative heat-exchanger (14) having a central duct (14b), the heat-exchanger having at one end an annular chamber (11a) with an inlet (11) for system air to flow as charge-air through the heat-exchanger (14) ; a radial flow air expansion turbine (13) at the end of the heat-exchanger (14) remote from said annular chamber (11a) and providing a turn-around flow path for the system air to pass into the said central duct (14b) subsequent to expansion and cooling by the turbine, the wheel (13a) of the turbine being arranged to drive a compressor wheel (22a) mounted on a shaft common thereto ; at least one inlet port (11) in the wall of the central duct (14b) adjacent to the turbine outlet (15) for admitting cooled system air as coolant flow into the heat-exchanger (14) ; at least one bypass port (14g) in the wall of the central duct (14b) adjacent to the outlet thereof and connecting the said annular chamber (11a) directly to the central duct (14b) ; and a temperature-responsive air flow control valve means (17) arranged to sense temperature of the system air in the central duct and operably respond to control flows through said inlet port (11) and said bypass port (14g).

6. An air cycle cooling apparatus as claimed in Claim 5, characterised in that said temperature-responsive air flow control valve means (17) is housed in the central duct (14b).

7. An air cycle cooling apparatus as claimed in Claim 5 or Claim 6, characterised in that said temperature-responsive air flow control valve means (17) includes a linear actuator (17b) that is extended by expansion of a thermal wax.

8. An air cycle cooling apparatus as claimed in Claim 7, characterised in that the linear actuator (17b) carries two annular valve-heads (17c, 17d) spaced from each other along the length of the actuator (17b).

**Patentansprüche**

1. Verfahren zum Erzeugen eines Auslaßluftstroms (16) mit einer gesteuerten Temperatur, wobei die Temperatur einer Quellenluft (11) wie erforderlich durch Expansion in einer Turbine (13) reduziert wird, unterstützt wie erforderlich durch regeneratives Kühlen, gekennzeichnet durch Messen der Temperatur der Auslaßluft (15) der Turbine (13) und Steuern der zusätzlichen regenerativen Kühlung in Übereinstimmung mit der gemessenen Temperatur durch Einstellen eines Kühlmittelflusses (20) in einem regenerativen Wärmetauscher (14) unter Schaffen der zusätzlichen Kühlung.

2. Lufteinlaßkühlvorrichtung (10, 10a) mit einem Systemlufteinlaß (11, 12), der mit einem Systemluftauslaß (16) über einen Stromweg mit einem regenerativen Wärmetauscher (14) und einer Luftexpansionsturbine (13) verbunden ist, gekennzeichnet durch ein auf die Temperatur der Auslaßluft (16) des Systems ansprechendes Luftstromsteuerventil (17), das zur Steuerung eines Kühlmittelflußweges zu dem Wärmetauscher (14) für Systemluft, die von der Turbine gekühlt worden ist, angeordnet ist.

3. Luftkreislaufkühlvorrichtung nach Anspruch 2, weiter dadurch gekennzeichnet, daß das Luftstromsteuerventil (17) angeordnet ist zur Steuerung eines Systemluft-Nebenzweiges (14g, 23) des regenerativen Wärmeaustauschers (14) und der Luftexpansionsturbine (13) und derart, daß das Luftstromsteuerventil (17) ansprechend auf die ansteigende Temperatur der Systemauslaßluft (16) zunächst den Nebenzweigen (14g, 23) schließt und sodann den Kühlmittelflußweg (20) öffnet.

4. Luftkreislaufkühlvorrichtung nach Anspruch 2 oder Anspruch 3, weiter dadurch gekennzeichnet, daß das Luftstromsteuerventil (17) zwei Ventilköpfe (19, 24) aufweist, die den Kühlmittelflußweg (20) bzw. den Nebenzweig (14g, 23) steuern und unter Verwendung eines auf die Temperatur ansprechenden Mediums durch ein thermisches Betätigungselement (17b) betrieben werden.

5. Luftkreislaufkühlvorrichtung nach Anspruch 2 oder Anspruch 3, ausgebildet als integrierte, im wesentlichen zylindrische Einheit und in Kombination versehen mit einem rohrförmigen, regenerativen Wärmetauscher (14) mit einem zentralen Kanal (14b), wobei der Wärmetauscher an einem Ende mit einer rohrförmigen Kammer (11a) mit einem Einlaß (11) für Systemluft zum Strömen als Austauschluft durch den Wärmetauscher (14) versehen ist; einer Luftexpansionsturbine (15) mit radialer Strömung an dem von der rohrförmigen Kammer (11a) entfernten Ende des Wärmetauschers (14) und unter Erzeugung eines herumgeführten Strömungsweges für die Systemluft zur Führung in den zentralen Kanal (14b) nachfolgend and die Expansion und die Kühlung durch die Turbine, wobei die Schaufel (13a) der Turbine so angeordnet ist, daß eine auf einer gemeinsamen Welle montierte Kompressorschaufel (22a) angetrieben wird; wenigstens einem Einlaßloch (11) in der Wandung des zentralen Kanals (14b) benachbart zu dem Auslaß (15) der Turbine, um ein Strömen von gekühlter Systemluft als Kühlmittel in den Wärmetauscher (14) zu erlauben; wenigstens einem Nebenzweigloch (14g) in der Wandung des zentralen Kanals (14b) benachbart zu dessen Auslaß und zum Verbinden der ringförmigen Kammer (11a) direkt an den zentralen Kanal (14b); und einem auf die Temperatur ansprechenden Luftströmungsteuerventil (17), das angeordnet ist zum Messen der Temperatur der Systemluft in dem zentralen Kanal und ansprechend auf die Steuerströmungen durch das Einlaßloch (11) und das Nebenzweigloch (14g) betrieben werden kann.

6. Luftkreislaufkühlvorrichtung nach Anspruch 5, dadurch gekennzeichnet, daß das auf die Temperatur ansprechende Luftströmungssteuerventil (17) von dem zentralen Kanal (14b) aufgenommen wird.

7. Luftkreislaufkühlvorrichtung nach Anspruch 5 oder Anspruch 6, dadurch gekennzeichnet, daß das auf die Temperatur ansprechende Luftströmungssteuerventil (17) ein lineares Betätigungselement (17b) aufweist, das sich durch die Expansion eines thermischen Wachses dehnt.

8. Luftkreislaufkühlvorrichtung nach Anspruch 7, dadurch gekennzeichnet, daß das lineare Betätigungselement (17b) zwei rohrförmige Ventilköpfe (17c, 17d) trägt, die mit Abstand voneinander entlang der Erstreckung des Betätigungselementes (17b) angeordnet sind.

## Revendications

1. Procédé de production d'un flux d'air de sortie (16) à une température réglée, qui comprend l'abaissement de la température d'un air de source (11), comme nécessaire, par détente dans une turbine (13), complété comme nécessaire par un refroidissement à régénération, caractérisé par la détection de la température de l'air de sortie (15) de la turbine (13) et la commande du refroidissement supplémentaire à régénération, en fonction de la température détectée, par réglage de la circulation d'un fluide refroidisseur (20) dans un échangeur de chaleur à régénération (14) fournissant le refroidissement supplémentaire.

2. Appareil de refroidissement à cycle d'air (10, 10a) comportant une entrée d'air de système (11, 12) reliée à une sortie d'air de système (16) par un chemin de circulation comprenant un échangeur de chaleur à régénération (14) et une turbine à détente d'air (13), caractérisé par un organe obturateur (17) de commande de circulation d'air, sensible à la température de l'air de sortie du système (16) et agencé de manière à commander un passage de circulation de fluide refroidisseur, vers l'échangeur de chaleur (14), pour l'air de. système qui a été refroidi par la turbine.

3. Appareil de refroidissement à cycle d'air suivant la revendication 2, caractérisé en outre en ce que l'organe obturateur (17) de commande de circulation d'air est agencé de manière à commander un passage d'air de système (14g, 23) de contournement de l'échangeur de chaleur à régénération (14) et de la turbine à détente d'air (13), et de sorte que, en réponse à une élévation de la température d'air de sortie du système (16), l'organe obturateur (17) de commande de circulation d'air ferme d'abord ledit passage de contournement (14g, 23) et ouvre ensuite ledit passage de circulation de fluide refroidisseur (20).

4. Appareil de refroidissement à cycle d'air suivant la revendication 2 ou la revendication 3, caractérisé en outre en ce que l'organe obturateur (17) de commande de circulation d'air comprend deux têtes d'obturation (19, 24) commandant respectivement le passage de circulation de fluide refroidisseur (20) et ledit passage de contournement (14g, 23) et actionnées par un actionneur thermique (17b) utilisant une substance sensible à la température.

5. Appareil de refroidissement à cycle d'air suivant la revendication 2 ou la revendication 3, prévu sous la forme d'un ensemble intégré sensiblement cylindrique et comprenant en combinaison un échangeur de chaleur annulaire à régénération (14) qui comporte un conduit central (14b), l'échangeur de chaleur ayant à une extrémité une chambre annulaire (11a) avec une entrée (11) pour l'air de système qui circule comme air de charge à travers l'échangeur de chaleur (14) ; une turbine (13) à détente d'air à flux radial, placée à l'extrémité de l'échangeur de chaleur (14) à l'opposé de ladite chambre annulaire (11a) et constituant un passage de changement de direction pour l'air de système de manière à l'envoyer dans ledit conduit central (14b) après détente et refroidissement par la turbine, la roue (13a) de la turbine étant prévue pour entraîner une roue de compresseur (22a) montée sur un même arbre ; au moins un orifice d'entrée (14e) ménagé dans la paroi du conduit central (14b) près de la sortie (15) de la turbine pour admettre de l'air de système refroidi, comme fluide refroidisseur, dans l'échangeur de chaleur (14) ; au moins un orifice de contournement (14g) ménagé dans la paroi du conduit central (14b) près de sa sortie et reliant ladite chambre annulaire (11a) directement au conduit central (14b) ; et un organe obturateur (17) de commande de circulation d'air, sensible à la température, disposé de manière à détecter la température de l'air de système dans le conduit central et à répondre fonctionnellement pour commander les circulations à travers ledit orifice d'entrée (14e) et ledit orifice de contournement (14g).

6. Appareil de refroidissement à cycle d'air suivant la revendication 5, caractérisé en ce que ledit organe obturateur (17) de commande de circulation d'air sensible à la température est logé dans le conduit central (14b).

7. Appareil de refroidissement à cycle d'air suivant la revendication 5 ou la revendication 6, caractérisé en ce que ledit organe obturateur (17) de commande de circulation d'air sensible à la température comprend un actionneur linéaire (17b) qui s'allonge par dilatation d'une cire thermique.

8. Appareil de refroidissement à cycle d'air suivant la revendication 7, caractérisé en ce que l'actionneur linéaire (17b) porte deux têtes d'obturation annulaires (17c, 17d) espacées l'une de l'autre sur la longueur de l'actionneur (17b).

Fig.1.

Fig.2.